# FASCICULE DE BREVET EUROPEEN

(11) **EP 1 734 818 B1**
(45) Date de publication et mention de la délivrance du brevet: **01.12.2010**
(21) Numéro de dépôt: 05744630.4
(22) Date de dépôt: 29.03.2005
(51) Int. Cl.: A01N 31/16, A01N 31/08

(54) **COMPOSITION DECONTAMINANTE PRESENTANT A LA FOIS DES PROPRIETES BACTERICIDES, FONGICIDES ET VIRUSCIDES, PROCEDES D'OBTENTION ET UTILISATIONS D'UNE TELLE COMPOSITION**
DEKONTAMINIERENDE ZUSAMMENSETZUNG, DIE GLEICHZEITIG BAKTERIZIDE, FUNGIZIDE UND VIRUZIDE EIGENSCHAFTEN AUFWEIST, SOWIE VERFAHREN ZUR HERSTELLUNG UND VERWENDUNG DIESER ZUSAMMENSETZUNG
DECONTAMINATING COMPOSITION HAVING SIMULTANEOUSLY BACTERICIDAL, FUNGICIDAL AND VIROCIDAL PROPERTIES, METHODS FOR OBTAINING AND USING SAID COMPOSITION

(30) Priorité: 29.03.2004 FR 0403207
(43) Date de publication de la demande: 27.12.2006
(73) Titulaire: Hightech Bio-Activities SA, 38350 La Mure (FR)
(72) Inventeur: BELBACHIR, Hakima, 38000 Grenoble (FR); ANGELIDIS, Jean, 38330 Saint-Ismier (FR)
(74) Mandataire: Dorland, Anne-Marie
(86) Numéro de dépôt international: PCT/FR2005/000747
(87) Numéro de publication internationale: WO 2005/092094

(56) Documents cités:
- EP-A- 1 116 446
- WO-A-2004/066734
- FR-A- 2 618 670
- P.L.TEISSEDRE ET AL: "Inhibition of oxidation of human low-density lipoproteins by phenolic substances in different essential oils varieties" JOURNAL OF AGRICULTURAL FOOD CHEMISTRY, vol. 48, 2000, pages 3801-3805, XP002303520

## Description

### Domaine technique de l'invention

La présente invention se rapporte à une composition décontaminante. Plus particulièrement, l'invention concerne une composition présentant à la fois des propriétés bactéricides, fongicides et virucides ainsi que des procédés d'obtention et des utilisations d'une telle composition.

### Etat de la technique

Le document WO-A-0209777 décrit une méthode de traitement bactéricide, fongicide, virucide et insecticide de l'air ambiant consistant à faire circuler de l'air à travers un contenant perméable à l'intérieur duquel est placé un agent traitant ayant des effets bactéricides, fongicides, virucides et insecticides. L'agent traitant est composé de cristaux de sel minéral, en particulier de chlorure de sodium. L'agent traitant peut comprendre aussi des éléments d'origine végétale comme le clou de girofle. Ce document décrit également un dispositif de mise en ouvre de la méthode visée comprenant, entre deux feuilles de filtration mécanique de l'air, une couche d'agent traitant bactéricide, fongicide et virucide, répartie uniformément pour empêcher le développement de microorganismes sur les parois. Selon un mode de réalisation, le dispositif comprend notamment une strate de sels minéraux pour un traitement bactéricide, fongicide et/ou virucide de l'air et une strate de végétaux parcellisés tels le thym et/ou le clou de girofle.

Le dispositif décrit dans le WO-A-0209777, ainsi que l'agent traitant bactéricide, fongicide et virucide qui y est inclus, sont spécifiques au traitement de l'air ambiant.

Le document EP1116446 décrit un procédé d'amélioration de la durée de conservation et / ou de la stabilité des aliments altérables sous l'action de microbes. Le procédé décrit est caractérisé par l'utilisation d'un adjuvant de procédé comprenant un ou plusieurs arômes microbiologiquement actifs. Dans sa plus grande généralité, ce document couvre qualitativement un nombre extrêmement élevé de combinaisons possibles pour l'adjuvant de procédé. Tel qu'il est effectivement décrit, l'adjuvant de procédé contient systématiquement un alcool et nombre de ses constituants sont sous forme d'huile essentielle.

Le document FR2618670 décrit une préparation médicamenteuse à base d'huiles essentielles, utile notamment pour le traitement des affections buccales et du système dentaire, **caractérisée en ce qu**'elle comprend les huiles essentielles de cannelle, de citron, de clou de girofle, d'origan, de sarriette et de thym. La préparation médicamenteuse de ce document._ne comprend pas de vanilline. Les ingrédients clou de girofle, origan, sarriette et thym sont tous sous forme d'huile essentielle.

### Objets de l'invention

Un objet de la présente invention est de fournir une composition décontaminante ayant à la fois des propriétés bactéricides, fongicides et virucides et pouvant s'adapter à tout type de support à décontaminer.

Un autre objet de la présente invention est de fournir une composition décontaminante efficace ayant un spectre d'action très large à l'encontre des pathogènes.

Un autre objet de la présente invention est aussi de fournir une composition décontaminante qui présente de très bonnes caractéristiques antimicrobiennes avec une toxicité limitée.

Un objet de l'invention est aussi de fournir une composition décontaminante pouvant être obtenue à partir de matériaux biologiques non toxiques.

Un objet de l'invention est encore de fournir une composition décontaminante biodégradable.

Un autre objet de la présente invention est encore de fournir une composition décontaminante pouvant être obtenue aisément à partir de composants peu onéreux.

Un autre objet de l'invention est aussi de fournir une composition décontaminante qui peut être ingérée par les humains et les animaux.

Un objet de l'invention est encore de permettre de limiter la prolifération d'algues vertes, souvent rencontrée dans les traitements de décontamination.

D'autres objets et avantages de l'invention apparaîtront à la lecture de la description ci-après.

### Exposé de l'invention

Ces objets, ainsi que d'autres, sont satisfaits par la présente invention, qui fournit une composition décontaminante présentant à la fois des propriétés bactéricides, fongicides et virucides, comportant comme composants actifs de l'eugénol, de l'acétate d'eugénol, de la vanilline et du carvacrol, **caractérisée en ce que** l'eugénol, l'acétate d'eugénol, la vanilline et le carvacrol sont contenus dans des éléments végétaux,
- l'eugénol étant contenu dans du clou de girofle et présent à raison d'au moins environ 12 % en poids,
- l'acétate d'eugénol étant contenu dans du clou de girofle et présent à raison d'au moins environ 3% en poids,
- la vanilline étant contenue dans de la vanille et présente à raison d'au moins environ 0,1 % en poids,
- le carvacrol étant contenu dans le groupe constitué par l'origan et la sarriette et est présent à raison d'au moins environ 0,5 % en poids

La présence simultanée des quatre composants actifs : eugénol, acétate d'eugénol, vanilline et carvacrol, dans les quantités indiquées, est essentielle. La présence obligatoire d'au moins environ 0,1 % en poids de vanilline est particulièrement importante.

### Description détaillée des modes de réalisation préférés

Il faut noter que pour certaines applications, des problèmes de toxicité peuvent être rencontrés si les proportions d'eugénol et/ou d'acétate d'eugénol et/ou de carvacrol sont trop importantes. Dans chaque cas l'homme du métier déterminera aisément, au moyen d'essais de routine, les proportions d'eugénol, d'acétate d'eugénol et de carvacrol à ne pas dépasser.

Selon une autre caractéristique de l'invention, la composition décontaminante comporte en outre du thymol en tant que composant actif.

Quand du thymol est présent, la composition décontaminante de l'invention en comporte de préférence au moins environ 0,5 % en poids.

Selon un mode de réalisation de l'invention la composition décontaminante comporte en outre au moins un sel minéral en tant que composant actif.

Ce sel minéral est par exemple est choisi parmi les chlorures, les carbonates, les silicates et les sulfates de métaux alcalins, d'ammonium, de métaux alcalino-terreux, d'aluminium, de magnésium, et les aluns.

Selon une disposition de l'invention le sel minéral est choisi parmi le chlorure de sodium et le bicarbonate de sodium.

Le chlorure de sodium est de préférence contenu dans du sel gris, c'est-à-dire quand il est présent le chlorure de sodium est avantageusement ajouté sous forme de sel gris.

Le sel minéral, quand il est présent, représente en général au moins environ 0,5% en poids de la composition décontaminante

Une composition décontaminante particulièrement préférée selon la présente invention comporte comme composants actifs
- de l'eugénol contenu dans du clou de girofle à raison de 15-25 % en poids,
- de l'acétate d'eugénol contenu dans du clou de girofle présent à raison de 3-5 % en poids,
- de la vanilline contenue dans de la vanille présente à raison de 0,25-0,35 % en poids,
- du carvacrol contenu dans le groupe constitué par l'origan et de la sarriette présent à raison de 0,7-12 % en poids,
- du thymol contenu dans du thym présent à raison de 0,7-12 % en poids.

La composition comprend également de la matière inerte dont la nature dépend de la forme sous laquelle la composition est utilisée et de l'utilisation visée.

Selon une disposition avantageuse de l'invention, l'eugénol, l'acétate d'eugénol, la vanilline, le carvacrol et le thymol de cette composition décontaminante préférée sont contenus dans des éléments végétaux.

La composition décontaminante de l'invention peut également comporter au moins un oligo-élément, par exemple du cuivre, de l'or, de l'argent, du magnésium.

Elle peut aussi comprendre au moins un monoterpène, avantageusement un monoterpène dérivant d'un végétal, par exemple choisi dans le groupe constitué par le pin et le sapin.

La composition décontaminante de l'invention peut encore contenir au moins un alcool monoterpénique, avantageusement un alcool monoterpénique dérivant d'un végétal, par exemple choisi dans le groupe constitué par le bois de rose, la menthe poivrée et la citronnelle.

La composition décontaminante de l'invention peut également renfermer au moins un aldéhyde aromatique tel qu'un aldéhyde aromatique dérivant avantageusement d'un végétal, par exemple choisi dans le groupe constitué par la cannelle, le cumin, la lavande, etc.

Elle peut contenir également au moins un composé soufré dérivant avantageusement d'un végétal, par exemple choisi dans le groupe constitué par l'ail et l'oignon.

Elle peut aussi comporter au moins un composé azoté, dérivant avantageusement d'un élément végétal, par exemple de *citrus reticulata* ou de *citrus paradisi.*

Il est particulièrement intéressant que les phénols et les aldéhydes présents dans la composition décontaminante de l'invention soient de provenance végétale.

Il est également souhaitable de prendre des phénols à partir de plusieurs extraits de végétaux différents.

Dans un mode de réalisation avantageux de l'invention, la composition décontaminante de l'invention contient des extraits de plantes suivants :
- *eugenia caryophylatta*
- au moins un *origanum* choisi parmi *origanum heracleoticum* et *origanum majorana*
- *vanilla planifolia* Andrews

Mieux encore pour ce dernier mode de réalisation, la composition décontaminante contient en plus des extraits de plantes précédents, un ou plusieurs extraits de plantes choisis parmi les suivants :
- *artemisia dracunculus L.*
- *carum carvi*
- *chamaemelum nobile*
- *cinnamomum zeylanicum*
- *cinnamomum camphora*
- *citrus paradisi*
- *coriandrum sativum*
- *cuminum cyminum*
- *eucalyptus radiata*
- *hyssopus officinalis*
- *juniperus communis*
- *lavandula officinalis*
- *lippia citriodora*
- *melissa officinalis*
- *mentha piperita*
- *myristica fragrans*
- *ocimum gratissimum*
- *urtica dioica*
- *pimpinella anisum*
- *pinus pinaster*
- *rosmarinus officinalis*
- *salvia officinalis*
- *satureja montana*
- *sesamum indicum*
- *thymus vulgaris*
- *zingiber officinalis*
ainsi que des éléments choisis parmi le bicarbonate de soude, le chlorure de sodium et les colloïdes hydrophiles tels les argiles.

Les quantités des différents extraits et éléments présents dans la composition décontaminante seront adaptées par l'homme du métier pour que les pourcentages en poids de l'eugénol, de l'acétate d'eugénol, de la vanilline et du carvacrol de la composition décontaminante soient ceux spécifiés plus haut, à savoir au moins environ 12 % en poids pour l'eugénol, au moins environ 3% en poids pour l'acétate d'eugénol, au moins environ 0,1 % en poids pour la vanilline et au moins environ 0,5 % en poids pour le carvacrol.

Une composition décontaminante particulièrement préférée est donnée ci-après :
- argile / colloïdes hydrophiles = 12,0 % en poids
- *artemisia dracunculus* = 0,5 % en poids
- bicarbonate de soude = 1,0 % en poids
- *carum carvi* = 1,5 % en poids
- *chamaemelum nobile* = 0,5 % en poids
- *cinnamomum zeylanicum* = 0,5 % en poids
- *cinnamomum camphora* = 0,1 % en poids
- *citrus paradisi* = 0,1 % en poids
- *coriandrum sativum* = 1,0 % en poids
- *cuminum cyminum* = 2,0 % en poids
- *eucalyptus radiata* = 5,0 % en poids
- *eugenia caryophylatta* = 23,1 % en poids
- *hyssopus officinalis* = 1,0 % en poids
- *juniperus communis* = 0,5 % en poids
- *lavandula officinalis* = 5,0 % en poids
- *lippia citriodora* = 0,5 % en poids
- *melissa officinalis* = 0,5 % en poids
- *mentha piperita* = 0,5 % en poids
- *myristica fragrans* = 0,5 % en poids
- *ocimum gratissimum* = 0,5 % en poids
- *origanum heracleoticum* = 5,0 % en poids
- *origanum majorana* = 5,0 % en poids
- *urtica dioica* = 5,0 % en poids
- *pimpinella anisum* = 0,5 % en poids
- *pinus pinaster* = 2,0 % en poids
- *rosmarinus officinalis* = 10,0 % en poids
- *salvia officinalis* = 1,0 % en poids
- *satureja montana* = 1,0 % en poids
- *sesamum indicum* = 5,0 % en poids
- *thymus vulgaris* = 5,0 % en poids
- *vacilla planifolia* Andrews = 1,2 % en poids
- *zingiber officinalis* = 2,0 % en poids
- chlorure de sodium = 1,0 % en poids

L'invention fournit également un procédé de fabrication de la composition décontaminante de la présente invention dans laquelle les quatre composants actifs : eugénol, acétate d'eugénol, vanilline et carvacrol, sont contenus dans des éléments végétaux, l'eugénol et l'acétate d'eugénol dans du clou de girofle, la vanilline dans de la vanille et le carvacrol dans de l'origan ou dans de la sarriette.

Le procédé de fabrication de la composition décontaminante de l'invention dans laquelle les quatre composants actifs sont contenus dans des éléments végétaux est caractérisé en ce qu'il comporte :
(a) une première étape de broyage desdits éléments végétaux préalablement séchés, ladite étape de broyage conduisant à une poudre ayant une granulométrie moyenne allant d'environ 0,5 mm à environ 1,2 mm,
(b) une deuxième étape de macération à température ambiante de ladite poudre dans une solution pendant au moins 12 heures, de préférence pendant environ 24 heures, conduisant à une solution ou jus de macération et de la matière végétale inerte résiduelle.

Dans l'étape (a) ci-dessus, la granulométrie sera adaptée par l'homme du métier en fonction de la diffusabilité des principes actifs visée.

Les compositions décontaminantes comportant sous forme végétale, des composants actifs supplémentaires par rapport aux quatre "composants actifs de base" (eugénol, acétate d'eugénol, vanilline et carvacrol), peuvent être préparées de la même façon que celle décrite ci-dessus.

Pour certaines formes de la composition décontaminante, comme par exemple l'obtention d'un liquide biodécontaminant, une macération à froid est appropriée afin de ne pas détruire ou affaiblir les éléments actifs. Une macération typiquement de 72 heures est efficace.

L'étape de macération à température ambiante est effectuée dans une solution aqueuse, huileuse ou alcoolique.

Si la solution est une solution aqueuse, celle-ci est utilisée pour isoler les éléments hydrosolubles.

La solution de macération est ensuite habituellement séparée de la matière végétale inerte résiduelle.

La solution macération peut être utilisée pour former un produit solide, en imprégnant, par dépôt ou absorption, un support végétal ou minéral.

Par conséquent, après la deuxième étape, dite étape de macération, le procédé peut comprendre une troisième étape d'imprégnation, par dépôt ou absorption, de la solution de macération sur un support choisi parmi les supports végétaux inertes, habituellement poreux, et les supports minéraux.

Le support minéral est par exemple choisi dans le groupe constitué du talc, du charbon actif et des sels minéraux, tels par exemple le chlorure de sodium. Et le bicarbonate de sodium.

Le support peut être également choisi parmi les colloïdes hydrophiles tels les argiles.

Le support peut également être constitué par de la matière végétale inerte séchée, par exemple la matière végétale inerte résiduelle mais on peut aussi utiliser une autre matière végétale inerte.

Le produit résultant peut être alors séché, par exemple dans une étuve déshumidifiante ou bien stocké sous forme humide, selon les applications.

La matière végétale résiduelle inerte utilisée comme support selon l'invention sera habituellement séchée.

Pour certaines applications, notamment pour un nettoyage sous pression de sols, la matière végétale inerte résiduelle sera avantageusement laissée telle quelle, sans séchage, et la composition décontaminante sera sous forme de suspension liquide.

Le choix de la forme et de la nature du support inerte est effectué en fonction de l'application envisagée. Par exemple, le support inerte sera avantageusement sous forme de billes de gros diamètre pour les filtrations, sous forme de tissu pour obtenir un tissu biodécontaminant, etc.

Dans le cas où la composition décontaminante comprend du thymol contenu dans du thym, celui-ci peut être ajouté, une fois séché, lors de la première étape de broyage en même temps que les éléments végétaux contenant l'eugénol, l'acétate d'eugénol, la vanilline et le carvacrol.

Dans le clou de girofle, il est avantageux de n'utiliser que la tête mais il est possible d'utiliser la fleur entière.

Dans le cas où la composition décontaminante comprend un sel minéral, celui-ci est broyé, jusqu'à une granulométrie d'environ 0,1 à 0,5 mm, et il est ensuite ajouté dans la solution contenant les éléments végétaux broyés, avant, pendant ou après la macération.

Dans le cas où la composition décontaminante comprend un ou plusieurs oligo-éléments, ceux-ci peuvent être ajoutés dans la solution de macération.

Il est également possible, bien que ce ne soit pas le mode de réalisation préféré, de préparer une composition décontaminante selon l'invention dans laquelle les composants actifs sont contenus dans des éléments végétaux, par broyage, mélange mécanique intime et tamisage desdits éléments végétaux préalablement séchés, sans effectuer l'étape de macération. Une composition décontaminante obtenue selon ce dernier mode opératoire reste efficace mais généralement moins que celle préparée selon le procédé préféré mettant en jeu une étape de macération; son homogénéité est en outre moindre et il peut être plus difficile d'assurer ainsi des caractéristiques constantes.

La fabrication de la composition décontaminante de l'invention sous forme liquide est effectuée à partir de la composition décontaminante sous forme solide, par exemple par :
- trempage de ladite composition décontaminante sous forme solide dans de l'eau stérile ou non selon les applications, un autre liquide tel un alcool ou une huile, etc.
- passage d'eau, stérile ou non selon les applications, tiède ou chaude à travers la composition décontaminante sous forme solide, par exemple en grains,
- passage d'autres liquides à travers la composition décontaminante sous forme solide.

Dans les deux derniers modes, le liquide recueilli après passage à travers la composition décontaminante sous forme solide constitue la composition décontaminante sous forme liquide.

La composition décontaminante de la présente invention présente simultanément des propriétés bactéricides, fongicides et virucides qui peuvent permettre de décontaminer un très grand nombre de milieux et supports.

La composition décontaminante de l'invention peut par exemple être utilisée sous forme de savons liquides ou solides, de sachets de poudre destinés à être placés dans des appareils ménagers tels que dans le sac d'un aspirateur, dans le compartiment destiné au produit nettoyant d'un lave-vaisselle ou d'un lave-linge. Elle peut également être disposée dans les litières d'animaux domestiques pour les désinfecter et réduire leurs odeurs. Elle peut aussi être contenue dans des peintures, en particulier peintures à l'eau, colles, des tapisseries, papiers peints, revêtements de sols, semelles, bois agglomérés, etc. Elle peut également imprégner sous forme liquide des tissus ou des non tissés comme des vêtements à usage médical, des draps, des housses, des champs opératoires, des pansements, des gazes pouvant être utilisées par exemple pour être appliquées sur la peau des grands brûlés, des lingettes, etc. Les tissus et les non-tissés traités par la composition décontaminante selon l'invention sont non seulement stériles mais encore biodécontaminants.

Dans une mise en oeuvre particulièrement intéressante de la présente invention, la composition décontaminante est intégrée dans le processus de fabrication dans d'un matériau, conduisant à un matériau biodécontaminant. Le matériau est par exemple une matière plastique, un papier, un non-tissé. On peut ainsi obtenir, par exemple, des jouets, des touches de clavier, des touches d'ascenseur biodécontaminants. La composition décontaminante de l'invention peut également être intégrée dans le processus de fabrication des sols de piscine.

Plusieurs méthodes d'intégration de la composition décontaminante de l'invention existent pour la fabrication de matériaux biodécontaminants :
- Méthode par dépôt granulaire maintenu mécaniquement dans un filtre, avec un pré-filtre faisant office de tenue mécanique de la composition décontaminante granulaire (ce pré-filtre peut également être traité par la composition décontaminante).
- Méthode d'intégration dans un média fibreux. Cette méthode d'intégration de composition décontaminante sous forme granulaire dans un média filtrant permet le maintien des particules biodécontaminantes par les fibres mêmes du substrat.
- Méthode d'intégration dans le média filtrant au moment de sa fabrication : la composition décontaminante sous forme granulaire est déposée sur les fibres (par exemple, fibres de verre) au moment de la fabrication du média, alors que ce denier n'est pas encore sec. L'évacuation des liquides et le séchage interviennent ensuite.
- Méthode par intégration dans le liant sous forme liquide au moment de la fabrication média filtrant. La composition décontaminante sous forme liquide est mélangée au liant. L'évacuation des liquides et le séchage interviennent ensuite.
- Méthode par dépôt de composition décontaminante sous forme liquide par trempage : le média filtrant (fibre, tissu, papier) passe dans de la composition décontaminante sous forme liquide et est ensuite séché. Le support ainsi traité devient biodécontaminant. Il peut être utilisé pour fabriquer des médias filtrants (masques, filtres, etc.), des vêtements biodécontaminants pouvant être utilisés dans les milieux hospitaliers, mais aussi par les pompiers ou en usage domestique.

La composition décontaminante de l'invention peut également être mélangée sous forme granulaire dans des savons. La composition décontaminante en grains est mélangée à de la pâte à savon qui est ensuite envoyée vers le procédé habituel de fabrication par moulage du savon.

La composition décontaminante de l'invention peut aussi être mélangée dans les savons liquides et autres produites ménagers ou de toilette. Le mélange se fait entre deux liquides à température ambiante durant le temps nécessaire à l'obtention d'une pâte ou d'un liquide de couleur uniforme démontrant l'homogénéité du mélange.

Le traitement de l'eau et des liquides est effectué soit par passage à travers un filtre contenant la composition décontaminante de l'invention sous une forme solide à granulométrie déterminée selon l'application, soit directement avec de la composition décontaminante sous forme d'un liquide mélangé au liquide à traiter.

Lorsque ses composants actifs sont contenus dans des végétaux, la composition décontaminante de l'invention peut également, pour certaines concentrations des éléments actifs, être ingérée notamment comme complément alimentaire, par exemple sous forme de poudre, de cachets ou de comprimés.

L'invention sera à présent décrite plus en détails en référence aux Exemples non limitatifs ci-après.

### Exemple 1

Une composition décontaminante contenant :
- eugénol : 20% en poids
- acétate d'eugénol : 4,0 % en poids
- vanilline : 0,3 % en poids
- carvacrol : 1,0 % en poids
- thymol : 1,0 % en poids
- matière végétale inerte qsp 100
a été préparée comme suit.

On a séché à basse température, c'est-à-dire à environ 30°C, des clous de girofle.

On a séparé les têtes des clous de girofle séchés.

On a séché à environ 30°C de l'origan, du thym (fleurs et feuilles) et de la vanille.

On a mélangé les végétaux séchés, à savoir 80 g des têtes des clous de girofle, 15 g du thym (fleurs et feuilles), 1,5 g de la vanille et 3,5 g de la sarriette.

On a broyé et tamisé le mélange des végétaux séchés jusqu'à une granulométrie moyenne de 0,5 mm.

On a fait macérer le mélange broyé et tamisé à température ambiante pendant 24 heures en solution dans 100 ml d'eau déionisée.

On a ainsi obtenu du jus de macération et de la matière végétale résiduelle inerte.

On a extrait le jus de macération et on en a imprégné la matière végétale résiduelle inerte préalablement séchée.

On a séché la matière végétale résiduelle inerte imprégnée dans une étuve déshumidifiante pour obtenir 100 g de composition sous forme d'une poudre marron avec granulométrie moyenne de 0,5 mm.

En solution dans 10 ml d'eau distillée déionisée, son pH est d'environ 4.

On a réalisé une suspension de la bactérie *Mycobacterium tuberculosis* en incorporant, sous une hotte à flux laminaire vertical, 10⁵ UFC/ml (UFC signifie le nombre d'unités formant une colonie pour 1 ml) dans une gélose.

On a ensuite coulé la suspension dans trois boîtes de Pétri où elle s'est solidifiée.

On a ajouté à chacune des trois boîtes de Pétri respectivement 0,1 g, 0,25 g et 0,5 g de la composition décontaminante préparée ci-dessus.

Après une incubation de quatre semaines à 37°C, les trois boîtes de Pétri présentaient un halo d'inhibition autour des cupules contenant la poudre décontaminante, ce qui démontre l'activité antibactérienne de la composition décontaminante testée pour les trois quantités indiquées, même avec une quantité aussi faible que 0,1 g.

### Exemple 2

On a déposé trois millilitres d'une suspension contenant environ 10⁶ UFC/ml de la bactérie *Pseudomonas aeroginosa* avec trois millilitres de bouillon nutritif dans cinq tubes à essai.

On a ajouté à chacun des cinq tubes à essai respectivement 0,1 g, 0,25 g, 0,5 g, 0,75 g et 1 g de la composition décontaminante de l'Exemple 1.

On a incubé les cinq tubes à essai pendant 24 heures à 37°C.

On a constaté que la concentration minimale inhibitrice pour la composition décontaminante testée était de 0,25 g pour 6 ml.

### Exemple 3

On a déposé trois millilitres d'une suspension contenant environ 10⁶ UFC/ml de la bactérie *Staphylococcus aureus* avec trois millilitres de bouillon nutritif dans cinq tubes à essai.

On a ajouté à chacun des cinq tubes à essai respectivement 0,1 g, 0,25 g, 0,5 g, 0,75 g et 1 g de la composition décontaminante de l'Exemple 1.

On a incubé les cinq tubes à essai pendant 24 heures à 37°C.

On a constaté que la concentration minimale inhibitrice pour la composition décontaminante testée était de 0,1 g pour 6 ml.

### Exemple 4

On a déposé trois millilitres d'une suspension contenant environ 10⁶ UFC/ml du champignon *Candida albicans* avec trois millilitres de bouillon nutritif dans cinq tubes à essai.

On a ajouté à chacun des cinq tubes à essai respectivement 0,1 g, 0,25 g, 0,5 g, 0,75 g et 1 g de la composition décontaminante de l'Exemple 1.

On a incubé les cinq tubes à essai pendant 24 heures à 30°C.

On a constaté que la concentration minimale inhibitrice pour la composition décontaminante testée était de 0,1 g pour 6 ml.

### Exemple 5

On a déposé trois millilitres d'une suspension contenant environ 10⁶ UFC/ml du champignon *Aspergillus niger* avec trois millilitres de bouillon nutritif dans cinq tubes à essai.

On a ajouté à chacun des cinq tubes à essai respectivement 0,1 g, 0,25 g, 0,5 g, 0,75 g et 1 g de la composition décontaminante de l'Exemple 1.

On a incubé les cinq tubes à essai pendant 24 heures à 30°C.

On a constaté que la concentration minimale inhibitrice pour la composition décontaminante testée était de 0,75 g pour 6 ml.

### Exemple 6

On a déposé trois millilitres d'une suspension contenant environ 10⁶ UFC/ml de la bactérie *Legionella pneumophila* avec trois millilitres de bouillon nutritif dans cinq tubes à essai.

On a ajouté à chacun des cinq tubes à essai respectivement 0,1 g, 0,25 g, 0,5 g, 0,75 g et 1 g de la composition décontaminante de l'Exemple 1.

On a incubé les cinq tubes à essai pendant 24 heures à 37°C.

On a constaté que la concentration minimale inhibitrice pour la composition décontaminante testée était de 0,1 g pour 6 ml, soit un produit dilué à 1,7 %.

### Exemple 7

Cet Exemple a pour but de déterminer l'évolution de la bactérie *Pseudomonas aeroginosa* en fonction du temps d'exposition avec la composition décontaminante de l'Exemple 1.

La bactérie *Pseudomonas aeroginosa* est une bactérie présente dans la terre et dans l'eau qui est susceptible d'infecter le corps humain par les voies respiratoires.

On a reconstitué la souche de bactéries dans un bain nutritif, on l'a incubée à 35°C pendant 24 heures et on l'a centrifugée à 2500 tours/mn pendant 10 minutes.

On a éliminé le surnageant puis on a lavé trois fois la pastille microbienne restante avec de l'eau déionisée stérile tamponnée.

On a ensuite remis la pastille en suspension dans 50 ml d'eau déionisée stérile tamponnée.

On a ajouté, dans cinq fioles Erlenmeyer de 250 ml, 100 ml d'eau déionisée stérile tamponnée contenant une quantité de 1.10⁶ UFC/ml de la bactérie *Pseudomonas aeroginosa* et, respectivement 0 g, 1 g, 5 g, 10 g et 25 g de la composition décontaminante de l'Exemple 1.

On a placé les cinq fioles dans un dispositif vibratoire rotatif à 50 tours/mn à 25°C.

On a retiré 1 ml de chaque fiole au bout de 0 heure, 4 heures et 24 heures et on l'a transféré dans 1 ml d'une solution neutralisante.

Le Tableau I ci-dessous indique la concentration UFC/ml de la bactérie *Pseudomonas aeroginosa* contenue dans les prélèvements réalisés.

**Tableau I**

| Temps d'exposition h | 0 g | 1 g | 5 g | 10 g | 25 g |
|---|---|---|---|---|---|
| 0 | 3,4. 10⁶ | 2,8. 10⁶ | 3,7. 10⁶ | 2,9. 10⁶ | 4,4. 10⁶ |
| 4 | 4,0. 10⁶ | <1,0.10¹ | <1,0.10¹ | <1,0.10¹ | <1,0.10¹ |
| 24 | 7,2.10⁷ | <1,0.10¹ | <1,0.10¹ | <1,0.10¹ | <1,0.10¹ |

Comme indiqué dans le Tableau I, au bout de 4 heures, on peut considérer que la composition décontaminante a éliminé la bactérie *Pseudomonas aeroginosa* car elle a fait chuter sa concentration sensiblement d'un facteur 10⁵.

### Exemple 8

L'Exemple 7 a été répété avec la bactérie *Staphylococcus aureus.*

Le Tableau II ci-dessous indique la concentration UFC/ml de la bactérie *Staphylococcus aureus* contenue dans les prélèvements réalisés.

**Tableau II**

| Temps d'exposition h | 0 g | 1 g | 5 g | 10g | 25 g |
|---|---|---|---|---|---|
| 0 | 4,2. 10⁶ | 2,9. 10⁶ | 4,0. 10⁶ | 4,1. 10⁶ | 3,7. 10⁶ |
| 4 | 4,7. 10⁶ | <1,0.10¹ | <1,0.10¹ | <1,0.10¹ | 4,0.10¹ |
| 24 | 3,9.10⁷ | <1,0.10¹ | <1,0.10¹ | <1,0.10¹ | 2,3.10¹ |

Comme indiqué dans le Tableau II, au bout de 4 heures, la composition décontaminante a éliminé la majeure partie de la bactérie *Staphylococcus aureus* et a fait chuter la concentration sensiblement d'un facteur 10⁵.

### Exemple 9

On a reconstitué la souche de bactéries *Staphylococcus aureus* dans un bain nutritif, on l'a incubée à 35°C pendant 24 heures et on l'a centrifugée à 2400 tours/mn pendant 10 minutes.

On a éliminé le surnageant puis on a lavé trois fois la pastille microbienne restante avec de l'eau déionisée stérile tamponnée.

On a ensuite remis la pastille en suspension dans 50 ml d'eau déionisée stérile tamponnée.

On a ajouté, dans une fiole Erlenmeyer de 250 ml, 100 ml d'eau déionisée stérile tamponnée contenant une quantité de 1.10⁶ UFC de la bactérie *Staphylococcus aureus* et 25 g de la composition décontaminante de l'Exemple 1.

On a placé la fiole dans un dispositif vibratoire rotatif à 50 tours/mn à 25°C.

On a retiré 1 ml de la fiole au bout de 1 minute et on l'a transféré dans 1 ml d'une solution neutralisante.

On a constaté que la bactérie *Staphylococcus aureus* a été complètement éliminée.

### Exemple 10

La composition décontaminante de l'Exemple 1 a été testée contre le *Coronavirus humain* de type ATTC VR-740, souche 229^{E}, se rapprochant du coronavirus responsable du SRAS ou syndrome respiratoire aigu sévère. On a constaté que la composition décontaminante dans une proportion de 1:10 dans une suspension tamponnée désactive 99,97 %, soit au moins 3,6log₁₀ du virus en 10 minutes.

## Revendications

1. Composition décontaminante présentant à la fois des propriétés bactéricides, fongicides et virucides, comportant comme composants actifs de l'eugénol, de l'acétate d'eugénol, de la vanilline et du carvacrol, **caractérisée en ce que** l'eugénol, l'acétate d'eugénol, la vanilline et le carvacrol sont contenus dans des éléments végétaux,
- l'eugénol étant contenu dans du clou de girofle et présent à raison d'au moins environ 12 % en poids,
- l'acétate d'eugénol étant contenu dans du clou de girofle et présent à raison d'au moins environ 3% en poids,
- la vanilline étant contenue dans de la vanille et présente à raison d'au moins environ 0,1 % en poids,
- le carvacrol étant contenu dans le groupe constitué par l'origan et la sarriette et est présent à raison d'au moins environ 0,5 % en poids.

2. Composition décontaminante selon la revendication 1, **caractérisée en ce qu'**elle comporte en outre au moins environ 0,5 % en poids de thymol contenu dans du thym en tant que composant actif.

3. Composition décontaminante selon la revendication 1, **caractérisée en ce qu'**elle comporte en outre au moins environ 0, 5 % en poids d'un sel minéral choisi parmi les chlorures, les carbonates, les silicates et les sulfates de métaux alcalins, d'ammonium, de métaux alcalino-terreux, d'aluminium, de magnésium, et les aluns.

4. Composition décontaminante selon la revendication 2, **caractérisée en ce qu'**elle comporte comme composants actifs
- de l'eugénol contenu dans du clou de girofle à raison de 15-25 % en poids,
- de l'acétate d'eugénol contenu dans du clou de girofle présent à raison de 3-5
% en poids,
- de la vanilline contenue dans de la vanille présente à raison de 0,25-0,35 % en poids,
- du carvacrol contenu dans le groupe constitué par l'origan et de la sarriette présent à raison de 0,7-12 % en poids,
- du thymol contenu dans du thym présent à raison de 0,7-12 % en poids.

5. Composition décontaminante selon la revendication 4, **caractérisée en ce qu'**elle comporte en outre au moins un monoterpène dérivant d'un végétal choisi dans le groupe constitué par le pin et le sapin.

6. Composition décontaminante selon la revendication 4, **caractérisée en ce qu'**elle comporte en outre au moins un alcool monoterpénique dérivant d'un végétal choisi dans le groupe constitué par le bois de rose, la menthe poivrée et la citronnelle.

7. Composition décontaminante selon la revendication 4, **caractérisée en ce qu'**elle comporte en outre au moins un aldéhyde aromatique dérivant d'un végétal choisi dans le groupe constitué par la cannelle, le cumin et la lavande.

8. Composition décontaminante selon la revendication 4, **caractérisée en ce qu'**elle comporte en outre au moins un composé soufré dérivant d'un végétal choisi dans le groupe constitué par l'ail et l'oignon.

9. Composition décontaminante selon la revendication 4, **caractérisée en ce qu'**elle comporte en outre au moins un composé azoté dérivant d'un végétal choisi parmi *citrus reticulata* et *citrus paradisi.*

10. Composition décontaminante selon la revendication 4, **caractérisée en ce qu'**elle contient des extraits de plantes suivants :
- *eugenia caryophylatta*
- au moins un *origanum* choisi parmi *origanum heracleoticum* et *origanum majorana*
- *vanilla planifolia* Andrews

11. Composition décontaminante selon la revendication 10, **caractérisée en ce qu'**elle contient en outre un ou plusieurs extraits de plantes choisis parmi les suivants :
- *artemisia dracunculus L.*
- *carum carvi*
- *chamaemelum nobile*
- *cinnamomum zeylanicum*
- *cinnamomum camphora*
- *citrus paradisi*
- *coriandrum sativum*
- *cuminum cyminum*
- *eucalyptus radiata*
- *hyssopus officinalis*
- *juniperus communis*
- *lavandula officinalis*
- *lippia citriodora*
- *melissa officinales*
- *mentha piperita*
- *myristica fragrans*
- *ocimum gratissimum*
- *urtica dioica*
- *pimpinella anisum*
- *pinus pinaster*
- *rosmarinus officina*/*is*
- *salvia officinalis*
- *satureja montana*
- *sesamum indicum*
- *thymus vulgaris*
- *zingiber officinalis*
ainsi que des éléments choisis parmi le bicarbonate de soude, le chlorure de sodium et les colloïdes hydrophiles tels les argiles.

12. Composition décontaminante selon la revendication 11, **caractérisée en ce que** sa composition est :
- argile / colloïdes hydrophiles = 12,0 % en poids
- *artemisia dracunculus* = 0,5 % en poids
- bicarbonate de soude = 1,0 % en poids
- *carum carvi* = 1,5 % en poids
- *chamaemelum nobile* = 0,5 % en poids
- *cinnamomum zeylanicum* = 0,5 % en poids
- *cinnamomum camphora* = 0,1 % en poids
- *citrus paradisi* = 0,1 % en poids
- *coriandrum sativum* = 1,0 % en poids
- *cuminum cyminum* = 2,0 % en poids
- *eucalyptus radiata* = 5,0 % en poids
- *eugenia caryophylatta* = 23,1 % en poids
- *hyssopus offcinalis* = 1,0 % en poids
- *juniperus communis* = 0,5 % en poids
- *lavandula officinalis* = 5,0 % en poids
- *lippia citriodora* = 0,5 % en poids
- *melissa officinalis* = 0,5 % en poids
- *mentha piperita* = 0,5 % en poids
- *myristica fragrans* = 0,5 % en poids
- *ocimum gratissimum* = 0,5 % en poids
- *origanum heracleoticum* = 5,0 % en poids
- *origanum majorana* = 5,0 % en poids
- *urtica dioica* = 5,0 % en poids
- *pimpinella anisum* = 0,5 % en poids
- *pinus pinaster* = 2,0 % en poids
- *rosmarinus officinalis* = 10,0 % en poids
- *salvia officinalis* = 1,0 % en poids
- *satureja montana* = 1,0 % en poids
- *sesamum indicum* = 5,0 % en poids
- *thymus vulgaris* = 5,0 % en poids
- *vanilla planifolia* Andrews = 1,2 % en poids
- *zingiber officinalis* = 2,0 % en poids
- chlorure de sodium = 1,0 % en poids

13. Procédé de fabrication d'une composition décontaminante selon la revendication 1, **caractérisé en ce qu'**il comporte :
(a) une première étape de broyage des éléments végétaux préalablement séchés, ladite étape de broyage conduisant à une poudre ayant une granulométrie moyenne allant d'environ 0,5 mm à environ 1,2 mm,
(b) une deuxième étape de macération à température ambiante de ladite poudre dans une solution pendant au moins 12 heures, de préférence pendant environ 24 heures, conduisant à jus de macération et à de la matière végétale inerte résiduelle.

14. Procédé selon la revendication 13, **caractérisé en ce qu'**il comporte après la deuxième étape de macération, une troisième étape d'imprégnation de la solution de macération sur un support choisi parmi les supports végétaux poreux inertes et les supports minéraux inertes.

15. Procédé selon la revendication 14, **caractérisé en ce que** le support est constitué par de la matière végétale inerte résiduelle résultant de l'étape de macération (b).

16. Utilisation d'une composition décontaminante selon l'une quelconque des revendications 1 à 12 pour l'obtention d'un matériau biodécontaminant, **caractérisée en ce que** ladite composition décontaminante est intégrée dans le processus de fabrication dans dudit matériau.

17. Matériau biodécontaminant obtenu selon la revendication 16 choisi dans le groupe des matières plastiques, des papiers et des non tissés

## Claims

1. Decontaminating composition exhibiting at the same time bactericidal, fungicidal and virucidal properties, comprising, as active components, eugenol, eugenol acetate, vanillin and carvacrol, **characterized in that** the eugenol, eugenol acetate, vanillin and carvacrol are contained in plant elements,
- the eugenol being contained in clove and present in a proportion of at least approximately 12% by weight,
- the eugenol acetate being contained in clove and present in a proportion of at least approximately 3% by weight,
- the vanillin being contained in vanilla and present in a proportion of at least approximately 0.1 % by weight,
- the carvacrol being contained in the group constituted of oregano and savory and present in a proportion of at least approximately 0.5% by weight.

2. Decontaminating composition according to Claim 1, **characterized in that** it also comprises at least approximately 0.5% by weight of thymol contained in thyme, as active component.

3. Decontaminating composition according to Claim 1, **characterized in that** it also comprises at least approximately 0.5% by weight of a mineral salt chosen from chlorides, carbonates, silicates and sulphates of alkali metals, of ammonium, of alkaline earth metals, of aluminium or of magnesium, and alums.

4. Decontaminating composition according to Claim 2, **characterized in that** it comprises, as active components,
- eugenol contained in clove, in a proportion of 15-25% by weight,
- eugenol acetate contained in clove, present in a proportion of 3-5% by weight,
- vanillin contained in vanilla, present in a proportion of 0.25-0.35% by weight,
- carvacrol contained in the group constituted of oregano and savory, present in a proportion of 0.7-12% by weight.

5. Decontaminating composition according to Claim 4, **characterized in that** it also comprises at least one monoterpene deriving from a plant chosen from the group consisting of pine and fir.

6. Decontaminating composition according to Claim 4, **characterized in that** it also comprises at least one monoterpene alcohol deriving from a plant chosen from the group consisting of rosewood, peppermint and lemon grass.

7. Decontaminating composition according to Claim 4, **characterized in that** it also comprises at least one aromatic aldehyde deriving from a plant chosen from the group consisting of cinnamon, cumin and lavender.

8. Decontaminating composition according to Claim 4, **characterized in that** it also comprises at least one sulphur-containing compound deriving from a plant chosen from the group consisting of garlic and onion.

9. Decontaminating composition according to Claim 4, **characterized in that** it also comprises at least one nitrogenous compound deriving from a plant chosen from *citrus reticulata* and *citrus paradisi.*

10. Decontaminating composition according to Claim 4, **characterized in that** it contains extracts of plants below:
- *eugenia caryophylatta*
- at least one *origanum* chosen from *origanum heracleoticum* and *origanum majorana*
- *vanilla planifolia* Andrews.

11. Decontaminating composition according to Claim 10, **characterized in that** it also contains one or more extracts of plants chosen from the following:
- *artemisia dracunculus L.*
- *carum carvi*
- *chamaemelum nobile*
- *cinnamomum zeylanicum*
- *cinnamomum camphora*
- *citrus paradisi*
- *coriandrum sativum*
- *cuminum cyminum*
- *eucalyptus radiata*
- *hyssopus officinalis*
- *juniperus communis*
- *lavandula officinalis*
- *lippia citriodora*
- *melissa officinalis*
- *mentha piperita*
- *myristica fragrans*
- *ocimum gratissimunr*
- *urtica dioica*
- *pimpinella anisum*
- *pinus pinaster*
- *rosmarinus officinalis*
- *salvia officinalis*
- *satureja montana*
- *sesamum indicum*
- *thymus vulgaris*
- *zingiber officinalis*
and also elements chosen from sodium bicarbonate, sodium chloride and hydrophilic colloids such as clays.

12. Decontaminating composition according to Claim 11, **characterized in that** the composition thereof is:
- clay/hydrophilic colloids = 12.0 % by weight
- *artemisia dracunculus* = 0.5 % by weight
- sodium bicarbonate = 1.0 % by weight
- *carum carvi* = 1.5 % by weight
- *chamaemelum nobile* = 0.5 % by weight
- *cinnamomum zeylanicum* = 0.5 % by weight
- *cinnamomum camphora* = 0.1 % by weight
- *citrus paradisi* = 0.1 % by weight
- *coriandrum sativum* = 1.0 % by weight
- *cuminum cyminum* = 2.0 % by weight
- *eucalyptus radiata* = 5.0 % by weight
- *eugenia caryophylatta* = 23.1 % by weight
- *hyssopus officinalis* = 1.0 % by weight
- *juniperus communis* = 0.5 % by weight
- *lavandula officinalis* = 5.0 % by weight
- *lippia citriodora* = 0.5 % by weight
- *melissa officinalis* = 0.5 % by weight
- *mentha piperita* = 0.5 % by weight
- *myristica fragrans* = 0.5 % by weight
- *ocimzim gratissimum* = 0.5 % by weight
- *origanum heracleoticum* = 5.0 % by weight
- *origanum majorana* = 5.0 % by weight
- *urtica dioica* = 5.0 % by weight
- *pimpinella anisum* = 0.5 % by weight
- *pinus pinaster* = 2.0 % by weight
- *rosmarinus officinalis* = 10.0 % by weight
- *salvia officinalis* = 1.0 % by weight
- *satureja montana* = 1.0 % by weight
- *sesamum indicum* = 5.0 % by weight
- *thymus vulgaris* = 5.0 % by weight
- *vanilla planifolia* Andrews = 1.2 % by weight
- *zingiber officinalis* = 2.0 % by weight
- sodium chloride = 1.0 % by weight.

13. Method for producing a decontaminating composition according to Claim 1, **characterized in that** it comprises:
(a) a first step consisting in grinding the pre-dried plant elements, said grinding step producing a powder having a mean particle size ranging from approximately 0.5 mm to approximately 1.2 mm,
(b) a second step consisting in macerating said powder, at ambient temperature, in a solution for at least 12 hours, preferably for approximately 24 hours, resulting in a maceration juice and residual inert plant material.

14. Method according to Claim 13, **characterized in that** it comprises, after the second maceration step, a third step consisting in impregnating the maceration solution onto a support chosen from inert porous plant supports and inert mineral supports.

15. Method according to Claim 14, **characterized in that** the support is constituted of residual inert plant material resulting from the maceration step (b).

16. Use of a decontaminating composition according to any one of Claims 1 to 12, for obtaining a biodecontaminant material, **characterized in that** said decontaminating composition is integrated, in the production process, into said material.

17. Biodecontaminant material obtained according to Claim 16, chosen from the group of plastic materials, papers and non-wovens.

## Patentansprüche

1. Dekontaminierende Zusammensetzung, die gleichzeitig bakterizide, fungizide und viruzide Eigenschaften besitzt und die als Wirkstoffe Eugenol, Eugenolacetat, Vanillin und Carvacrol enthält, **dadurch gekennzeichnet, dass** Eugenol, Eugenolacetat, Vanillin und Carvacrol in pflanzlichen Bestandteilen enthalten sind, wobei
- Eugenol in Gewürznelke enthalten ist und zu mindestens etwa 12 Gew.-% vorliegt,
- Eugenolacetat in Gewürznelke enthalten ist und zu mindestens etwa 3 Gew.-% vorliegt,
- Vanillin in Vanille enthalten ist und zu mindestens etwa 0,1 Gew.-% vorliegt,
- Carvacrol in der Gruppe enthalten ist, die aus Oregano und Bergbohnenkraut besteht, und zu mindestens etwa 0,5 Gew.-% vorliegt.

2. Dekontaminierende Zusammensetzung nach Anspruch 1, **dadurch gekennzeichnet, dass** sie außerdem mindestens etwa 0,5 Gew.-% Thymol, das in Thymian enthalten ist, als Wirkstoff enthält.

3. Dekontaminierende Zusammensetzung nach Anspruch 1, **dadurch gekennzeichnet, dass** sie außerdem mindestens etwa 0,5 Gew.-% eines Mineralsalzes enthält, ausgewählt aus Chloriden, Carbonaten, Silikaten und Sulfaten von Alkalimetallen, Ammonium, Erdalkalimetallen, Aluminium, Magnesium und Alaunen.

4. Dekontaminierende Zusammensetzung nach Anspruch 2, **dadurch gekennzeichnet, dass** sie als Wirkstoffe
- Eugenol, das in Gewürznelke enthalten ist, zu 15-25 Gew.-%,
- Eugenolacetat, das in Gewürznelke enthalten ist, zu 3-5 Gew.-%,
- Vanillin, das in Vanille enthalten ist, zu 0,25-0,35 Gew.-%,
- Carvacrol, das in der Gruppe enthalten ist, die aus Oregano und Bergbohnenkraut besteht, zu 0,7-12 Gew.-%,
- Thymol, das in Thymian enthalten ist, zu 0,7-12 Gew.-%
enthält.

5. Dekontaminierende Zusammensetzung nach Anspruch 4, **dadurch gekennzeichnet, dass** sie außerdem mindestens ein Monoterpen enthält, das aus einer Pflanze stammt, die ausgewählt ist aus der Gruppe, bestehend aus Kiefer und Tanne.

6. Dekontaminierende Zusammensetzung nach Anspruch 4, **dadurch gekennzeichnet, dass** sie außerdem mindestens einen Monoterpenalkohol enthält, der aus einer Pflanze stammt, die ausgewählt ist aus der Gruppe, bestehend aus Rosenholz, Pfefferminze und Zitronella.

7. Dekontaminierende Zusammensetzung nach Anspruch 4, **dadurch gekennzeichnet, dass** sie außerdem mindestens einen aromatischen Aldehyd enthält, der aus einer Pflanze stammt, die ausgewählt ist aus der Gruppe, bestehend aus Zimt, Kreuzkümmel und Lavendel.

8. Dekontaminierende Zusammensetzung nach Anspruch 4, **dadurch gekennzeichnet, dass** sie außerdem mindestens eine Schwefelverbindung enthält, die aus einer Pflanze stammt, die ausgewählt ist aus der Gruppe, bestehend aus Knoblauch und Zwiebel.

9. Dekontaminierende Zusammensetzung nach Anspruch 4, **dadurch gekennzeichnet, dass** sie außerdem mindestens eine Stickstoffverbindung enthält, die aus einer Pflanze stammt, die ausgewählt ist aus *Citrus reticulata* und *Ci trus paradisi.*

10. Dekontaminierende Zusammensetzung nach Anspruch 4, **dadurch gekennzeichnet, dass** sie Extrakte aus den folgenden Pflanzen enthält:
- *Eugenia caryophyllata*
- mindestens einem *Origanum,* ausgewählt aus *Origanum heracleoticum* und *Origanum majorana*
- *Vanilla planifolia* Andrews.

11. Dekontaminierende Zusammensetzung nach Anspruch 10, **dadurch gekennzeichnet, dass** sie außerdem einen oder mehrere Extrakt(e) aus Pflanzen enthält, die aus den folgenden ausgewählt sind:
- *Artemisia dracunculus L.*
- *Carum carvi*
- *Chamaemelum nobile*
- *Cinnamonum zeylanicum*
- *Cinnamonum camphora*
- *Citrus paradisi*
- *Coriandrum sativum*
- *Cuminum cyminum*
- *Eucalyptus radiata*
- *Hyssopus officinalis*
- *Juniperus communis*
- *Lavandula officinalis*
- *Lippia citriodora*
- *Melissa officinalis*
- *Mentha piperita*
- *Myristica fragrans*
- *Ocimum gratissimum*
- *Urtica dioica*
- *Pimpinella anisum*
- *Pinus pinaster*
- *Rosmarinus officinalis*
- *Sal via officinalis*
- *Satureja montana*
- *Sesamum indicum*
- *Thymus vulgaris*
- *Zingiber officinalis*
sowie Bestandteile, die aus Natriumbicarbonat, Natriumchlorid und hydrophilen Kolloiden, wie Tonen, ausgewählt sind.

12. Dekontaminierende Zusammensetzung nach Anspruch 11, **dadurch gekennzeichnet, dass** sie folgende Zusammensetzung hat:
| | | | |
|---|---|---|---|
| - Ton/hydrophile Kolloide | = | 12,0 | Gew.-% |
| - *Artemisia dracunculus* L. | = | 0,5 | Gew.-% |
| - Natriumbicarbonat | = | 1,0 | Gew.-% |
| - *Carum carvi* | = | 1,5 | Gew.-% |
| - *Chamaemelum nobile* | = | 0,5 | Gew.-% |
| - *Cinnamonum zeylanicum* | = | 0,5 | Gew.-% |
| - *Cinnamonum camphora* | = | 0,1 | Gew.-% |
| - *Citrus paradisi* | = | 0,1 | Gew.-% |
| - *Coriandrum sativum* | = | 1,0 | Gew.-% |
| *- Cuminum cyminum* | = | 2,0 | Gew.-% |
| *- Eucalyptus radiata* | = | 5, 0 | Gew.-% |
| - *Eugenia caryophyllata* | = | 23,1 | Gew.-% |
| - *Hyssopus officinalis* | = | 1,0 | Gew.-% |
| - *Juniperus communis* | = | 0,5 | Gew.-% |
| - *Lavandula officinalis* | = | 5, 0 | Gew.-% |
| - *Lippia citriodora* | = | 0,5 | Gew.-% |
| - *Melissa officinalis* | = | 0,5 | Gew.-% |
| - *Mentha piperita* | = | 0,5 | Gew.-% |
| - *Myristica fragrans* | = | 0,5 | Gew.-% |
| - *Ocimum gratissimum* | = | 0,5 | Gew.-% |
| - *Origanum heracleoticum* | = | 5,0 | Gew.-% |
| - *Origanum majorana* | = | 5, 0 | Gew.-% |
| - *Urtica dioica* | = | 5,0 | Gew.-% |
| - *Pimpinella anisum* | = | 0,5 | Gew.-% |
| - *Pinus pinaster* | = | 2,0 | Gew.-% |
| - *Rosmarinus officinalis* | = | 10, 0 | Gew.-% |
| *- Salvia officinalis* | = | 1,0 | Gew.-% |
| - *Satureja montana* | = | 1,0 | Gew.-% |
| - *Sesamum indicum* | = | 5,0 | Gew.-% |
| - *Thymus vulgaris* | = | 5,0 | Gew.-% |
| - *Vanilla planifolia* Andrews | = | 1,2 | Gew.-% |
| - *Zingiber officinalis* | = | 2,0 | Gew.-% |
| - Natriumchlorid | = | 1,0 | Gew.-% |

13. Verfahren zur Herstellung einer dekontaminierenden Zusammensetzung nach Anspruch 1, **dadurch gekennzeichnet, dass** es folgendes umfasst:
(a) einen ersten Schritt, in dem man die zuvor getrockneten Pflanzenbestandteile zerkleinert, wobei der Zerkleinerungsschritt zu einem Pulver mit einer durchschnittlichen Granulometrie von etwa 0,5 mm bis etwa 1,2 mm führt,
(b) einen zweiten Schritt, in dem man das Pulver in einer Lösung während mindestens 12 Stunden, vorzugsweise während etwa 24 Stunden, mazeriert, was zu einem Mazerationssaft und zu einem Rückstand aus inerter pflanzlicher Substanz führt.

14. Verfahren nach Anspruch 13, **dadurch gekennzeichnet, dass** es nach dem zweiten Schritt der Mazeration einen dritten Schritt umfasst, bei dem man mit der Mazerationslösung einen Träger tränkt, der aus inerten porösen pflanzlichen Trägern und inerten mineralischen Trägern ausgewählt ist.

15. Verfahren nach Anspruch 14, **dadurch gekennzeichnet, dass** der Träger aus dem Rückstand von inerter pflanzlicher Substanz besteht, der aus dem Mazerationsschritt (b) erhalten wird.

16. Verwendung einer dekontaminierenden Zusammensetzung nach einem der Ansprüche 1 bis 12, um ein biologisch dekontaminierendes Material zu erhalten, **dadurch gekennzeichnet, dass** die dekontaminierende Zusammensetzung in das Herstellungsverfahren des Materials integriert wird.

17. Biologisch dekontaminierendes Material nach Anspruch 16, das aus der Gruppe mit Kunststoffmaterialien, Papieren und Vliesmaterialien ausgewählt ist.
